# DEMANDE DE BREVET EUROPEEN

(11) **EP 1 128 544 A1**
(43) Date de publication de la demande: **29.08.2001**
(21) Numéro de dépôt: 01400524.3
(22) Date de dépôt: 28.02.2001
(51) Int. Cl.: H02P 8/14

(54) **Générateur comportant deux paires de sorties PWM différentielles**

(30) Priorité: 29.02.2000 FR 0002550
(71) Demandeur: SAGEM S.A., 75116 Paris (FR)
(72) Inventeur: Denise, Sylvain, 95490 Vaureal (FR)
(74) Mandataire: Bloch, Gérard

(57) **Abrégé**

Le générateur à deux paires de sorties PWM différentielles (11-12, 21-22), comporte
- i) un microprocesseur (1) à une sortie PWM normale,
- ii) deux ensembles (10, 20), chacun à deux sorties (11-12, 21-22) et relié par une entrée à la sortie PWM normale (2) du microprocesseur (1),
   chaque ensemble (10, 20) ayant l'une de ses deux sorties (11-12, 21-22) qui correspond à la sortie PWM (2) du microprocesseur (1),
- iii) des moyens (B) d'inversion des deux sorties (11-12, 21-22) de chaque ensemble (10, 20).

## Description

L'invention concerne la commande des moteurs pas à pas, qu'on trouve par exemple dans les tableaux de bord de véhicule automobile pour l'entraînement des indicateurs à aiguille.

Grossièrement, un moteur pas à pas comporte un stator, avec deux bobines d'axes respectifs orthononaux engendrant deux champs magnétiques orthogonaux, et un rotor polarisé aligné sur la résultante des deux champs statoriques. Pour faire tourner le rotor et donc la résultante magnétique, on fait varier les alimentations des deux bobines du stator. Il est connu d'alimenter ces bobines à partir d'un microcontrôleur à sorties PWM (modulation de largeur d'impulsion) différentielles; une bobine étant alimentée par une paire de conducteurs, on peut contrôler le sens de la différence de potentiels aux deux bornes des bobines pour entraîner le vecteur de la résultante magnétique dans l'un ou l'autre des quatre quadrants du cercle trigonométrique, définis, comme on peut le rappeler, par le sinus et le cosinus de l'angle θ du vecteur résultante avec le demi-axe positif de référence :
- quadrant 1 cos θ > 0, sin θ > 0
- quadrant 2 cos θ < 0, sin θ > 0
- quadrant 3 cos θ < 0, sin θ < 0
- quadrant 4 cos θ > 0, sin θ < 0

Comme il y a souvent une pluralité de moteurs pas à pas dans un équipement, ce sont des microcontrôleurs à sorties PWM différentielles susceptibles de commander plusieurs moteurs qu'on trouve sur le marché. Il en résulte souvent l'inconvénient d'avoir un microcontrôleur soit surdimensionné, soit sousdimensionné et, dans ce cas, avec l'inconvénient supplémentaire d'avoir à prévoir un ou plusieurs composants supplémentaires pour la commande des moteurs en surnombre.

La présente invention vise à pallier ces inconvénients et à s'affranchir des coûteux microcontrôleurs à sorties PWM différentielles.

A cet effet, elle concerne un générateur à au moins deux paires de sorties PWM différentielles, caractérisé par le fait qu'il comporte
- i) un microprocesseur à au moins une sortie PWM normale,
- ii) deux ensembles, chacun à au moins deux sorties et relié par une entrée à la sortie PWM normale du microprocesseur, chaque ensemble étant agencé pour que l'une de ses deux sorties corresponde à la sortie PWM du microprocesseur,
- iii) des moyens d'inversion des deux sorties de chaque ensemble.

Ainsi, à partir d'un microprocesseur simple, à sortie PWM normale, prévue pour varier entre 0 et 1, on fournit des commandes de stator pouvant changer de signe grâce à l'inversion des deux sorties de chaque ensemble et permettant donc de sélectionner tout angle dans les quatre quadrants.

Selon une première forme de réalisation préférée, chaque ensemble est agencé pour que l'autre de ses deux sorties reste à un niveau extrême, par exemple supérieur, de la sortie PWM et chaque ensemble est relié, par une autre entrée, à une sortie du microprocesseur d'inversion de ses deux sorties.

Selon une deuxième forme de réalisation préférée, le microprocesseur comporte au moins deux sorties PWM normales reliées respectivement aux entrées des deux ensembles, chaque ensemble étant agencé pour que ses deux sorties soient inversées.

L'invention sera mieux comprise à l'aide de la description suivante du générateur de l'invention, en référence au dessin annexé, sur lequel :
- la figure 1 représente la première forme de réalisation évoquée ci-dessus et
- la figure 2 représente la deuxième forme de réalisation.

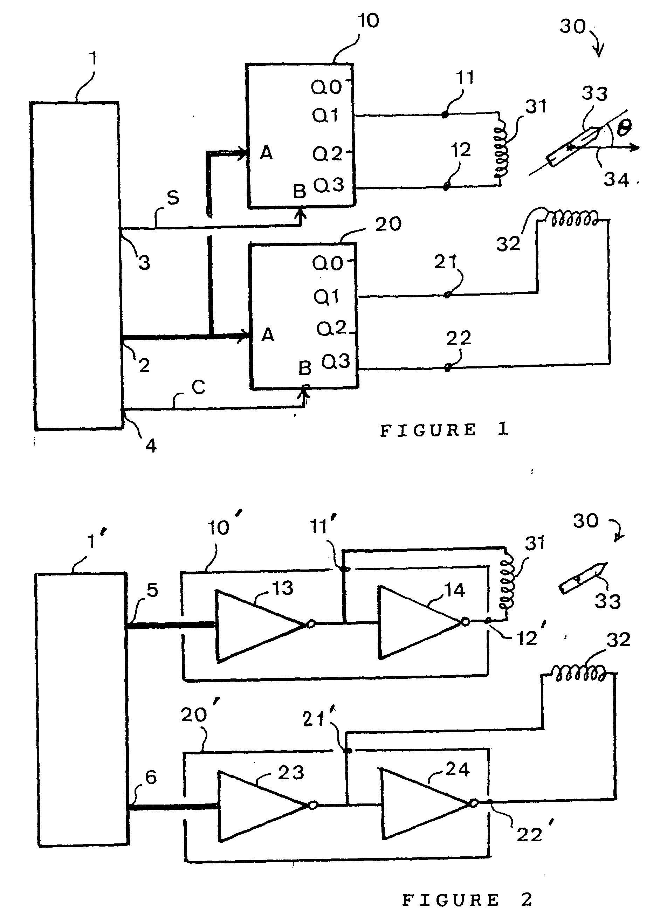

Le générateur représenté sur la figure 1 commande un motor pas à pas 30 comprenant un stator à deux bobines orthogonales 31 et 32. Le générateur comporte un microprocesseur 1 ayant au moins une sortie PWM, ici une seule, référencée 2, et deux ensembles identiques de circuits 10 et 20, chacun ayant au moins une paire de sorties ou bornes, 11, 12 et 21, 22, chaque paire de sorties 11, 12 et 21, 22 commandant en différentiel les bobines respectives 31 et 32. L'ensemble 10 et la bobine 31 traitent le sinus de l'angle θ que doit former le rotor 33 du moteur 30 par rapport à un demi-axe de référence 34. L'ensemble 20 et le bobinage 32 sont relatifs au cosinus θ.

Chaque ensemble 10, 20 est relié, par une entrée référencée A, à la sortie 2 de signal PWM normal, non différentiel, du microprocesseur 1. De même, chaque ensemble 10, 20 est relié par une entrée référencée B, à une sortie spécifique 3, 4 du microprocesseur 1. Chaque ensemble 10 (20) a une fonction d'aiguilleur à deux voies de sortie 11, 12 (21, 22) dont l'entrée B commande l'aiguillage du signal PWM de l'entrée A vers l'une ou l'autre des deux sorties 11, 12 (21, 22). Le microprocesseur 1 fournit un bit S sur la sortie 3 indiquant le signe de sinus θ et un bit associé C sur la sortie 4, indiquant le signe de cos θ. La paire de bits S et C désigne donc un quadrant parmi les quatre possibles.

Dans cet exemple, les circuits 10 et 20 sont constitués par un seul circuit intégré à deux démultiplexeurs indépendants, portant la référence commerciale 74xx139, xx désignant la famille technologique choisie. Chaque démultiplexeur comporte en fait quatre voies de sorties Q0, Q1, Q2, Q3, adressables ou activables successivement par les entrées A et B. On n'utilise que deux des quatre sorties, qui sont telles que l'on adresse l'une ou l'autre par changement d'état d'un seul des bits A et B (ici B). L'autre bit d'adressage, ici A, permet, par un changement d'état temporaire, d'adresser une des deux sorties inutilisées et donc de supprimer toute sélection par adressage des deux sorties utiles. L'entrée A est donc fonctionnellement une entrée d'inhibition de toute sélection de sortie utile.

On notera que toute sortie non adressée assure cependant la fourniture d'une tension logique prédéterminée et/ou d'un courant de commande, entrant ou sortant, d'état repos. L'absence de sélection fige simplement à l'état repos les sorties concernées, en interdisant le passage à l'état opposé, dit actif.

Ainsi, en considérant que l'entrée A à 0 autorise la sélection des sorties paires Q0 et Q2 et que l'entrée B (poids fort) à 0 autorise la sélection des deux premières sorties Q0 et Q1, on a ici choisi les sorties Q1 (BA = 01) et Q3 (BA = 11) comme sorties utiles 11 et 12. On aurait pu choisir Q0 et Q2, alors activées lorsque A = 0. De même encore, permutant le rôle des entrées A et B, l'un quelconque des couples Q0, Q1 et Q2, Q3 aurait pu être choisi, l'entrée A commandant alors la sélection entre les deux sorties utiles et l'entrée B inhibant ou non ces deux sélections.

Dans le cas du circuit 74xx139 ici utilisé, l'état de repos des trois sorties non sélectionnées à un instant donné est l'état logique haut, ou 1, et l'état actif, de sélection, de la sortie sélectionnée est l'état bas, ou 0. Ces deux états représentent les niveaux extrêmes, haut et bas, de la sortie PWM aux sorties 11 ou 12.

Le fonctionnement des circuits ci-dessus va maintenant être expliqué plus en détails.

Le microprocesseur 11 détermine, selon un processus hors du cadre de la présente invention, l'angle θ voulu et donc ses sinus et cosinus. Il fixe donc la valeur des deux bits de signe S et C et commande ainsi les ensembles 10 et 20 en fonction du quadrant voulu.

L'explication détaillée du fonctionnement des ensembles 10 et 20 va se limiter à l'ensemble 10, sachant que l'ensemble 20 fonctionne de même mais avec une commande spécifique (bit C).

Pour la simplicité de l'exposé, on n'a pas représenté deux circuits intégrateurs et amplificateurs de puissance reliant respectivement les sorties 11, 12 aux deux bornes de la bobine 31. Ces circuits de puissance fournissent, à un facteur d'amplification près, la tension moyenne du signal PWM, pour l'un, et une tension d'état 1, pour l'autre, et évitent d'échauffer inutilement la bobine 31 par la composante alternative du signal PWM. En variante, la bobine 31 constitue elle-même l'intégrateur du fait de sa composante selfique, la période de répétition des impulsions PWM étant suffisamment faible par rapport à l'inertie mécanique du rotor 33, pour éviter toute vibration.

Pour un sinus θ positif, il faut ici que la tension moyenne de la sortie 11 soit supérieure à celle de la sortie 12.

Comme les deux sorties utiles Q1 et Q3 sont à l'état 1 au repos, que l'on peut considérer comme représentant un niveau extrême, ici supérieur, de la sortie PWM 11 ou 12, il s'agit donc d'aiguiller les impulsions PWM de la sortie 2 vers la sortie 12, Q3, pour en abaisser le niveau moyen (en sortie de l'intégrateur associé). Le bit S en entrée B est alors mis à 1 pour autoriser la sélection des sorties Q2, inutilisée, et Q3. Le signal PWM de l'entrée A sélectionne alternativement les sorties autorisées Q2 et Q3 à adresses voisines paire et impaire. Pendant la fraction de la période du signal PWM pour laquelle il est au niveau 1, la sortie Q3 est sélectionnée et passe à 0. La sortie Q3 représente alors le complément du signal PWM de la sortie 2.

Le facteur de forme F du signal PWM (durée de l'état 1 rapportée à la période PWM) définit donc une baisse proportionnelle du niveau moyen, sur cette période, de la sortie Q3. Un facteur de forme F égal à 1, d'état 1 permanent, bloquerait la sortie Q3 à l'état complémentaire 0.

Pour un sinus θ négatif (S = 0), le signal PWM est aiguillé vers les sorties Q0 et Q1 et c'est alors le niveau moyen de la sortie Q1 qui diminue de 1 vers 0, alors que l'autre sortie utile Q3 reste à l'état permanent 1. C'est alors la sortie Q1 qui représente le complément du signal PWM de la sortie 2.

On comprendra que l'on aurait pu choisir un aiguilleur à logique complémentaire de celui représenté, dans lequel les états repos de sortie auraient été un 0, et non un 1 comme ici.

Dans tous les cas, partant de deux états repos identiques, 0 ou 1, pour les deux sorties 11, 12, on fait varier l'un d'eux périodiquement, à la montée ou à la descente, avec un facteur de forme F réglable, pour produire une différence de potentiel entre les deux sorties 11, 12, le choix de la sortie que l'on fait varier étant déterminé par le signe du sinus voulu. On inverse donc les deux sorties 11, 12, et donc la tension différentielle entre elles, par permutation entre l'état de sélection de l'une et l'état de non sélection de l'autre sortie.

La bobine 32 est commandée selon le même principe pour engendrer la force magnétique correspondant au cosinus θ voulu. Le facteur de forme F du signal PWM commun aux deux ensembles 10 et 20 est réglé pour que les amplitudes relatives des tensions de commande des bobinages 31 et 32 correspondent à la valeur relative entre le sinus et le cosinus de l'angle θ. En d'autres termes, on ne cherche pas ici à obtenir deux forces électromagnétiques bien déterminées pour les deux bobines 31 et 32, ce qui nécessiterait deux sorties PWM indépendantes au niveau du microprocesseur 1, mais on règle simplement le rapport des deux forces, ce qui ne nécessite qu'un seul PWM.

Dans l'exemple de la figure 2, le microprocesseur 1' comporte deux sorties PWM normales 5, 6, à un seul fil, commandant respectivement des ensembles 10' et 20' identiques, qui, globalement, sont fonctionnellement homologues des ensembles 10 et 20. L'ensemble 10' comporte un amplificateur-intégrateur de puissance 13, tel qu'évoqué pour la première réalisation, qui commande un inverseur linéaire de puissance 14. La bobine 31 est branchée en parallèle sur l'inverseur 14, donc commandée en différentiel par les sorties 11', 12'. La bobine de cosinus 32 est branchée de même (sorties 21', 22') sur l'amplificateur de sortie 24 commandé par l'amplificateur-intégrateur 23 de l'ensemble 20'.

Chacun des deux montages 10', 20' équivaut à un pont en H avec la bobine 31 (32) alimentée en différentiel entre les sorties des deux amplificateurs 13, 14 (23, 24), chacun étant apte à fonctionner en source de courant lorsque l'autre est à un potentiel inférieur et absorbe le courant de la bobine 31 (32).

La sortie 12' a pour valeur (après double inversion 13, 14) la valeur moyenne F de facteur de forme et la sortie 11' (après une seule inversion 13) a pour valeur 1-F.

La tension différentielle de la sortie 11', rapportée à celle de la sortie 12', vaut donc F - (1-F) = 2F-1. Elle peut donc varier, de façon continue, de - 1 à + 1, pour F variant de 0 à 1.

Chaque amplificateur de sortie 14 (24) permet de constituer, avec celui d'entrée 13 (23), un pont en H. Cette solution est a priori préférable à la variante possible qui consisterait à remplacer les amplificateurs de sortie 14 (24) par un circuit d'alimentation bidirectionnelle de tension fixe (point milieu), le pont en H ci-dessus n'ayant plus alors qu'un côté actif pouvant à volonté prendre une valeur de tension positive ou négative par rapport à la tension fixe de point milieu. Cependant, la tension d'excitation des bobines 31 et 32 serait deux fois moindre que dans le cas de la figure 2, puisqu'elle ne serait pas en différentiel.

## Revendications

1. Générateur à au moins deux paires de sorties PWM différentielles (11-12, 21-22; 11'-12', 21'-22'), caractérisé par le fait qu'il comporte
- i) un microprocesseur (1, 1') à au moins une sortie PWM normale,
- ii) deux ensembles (10, 20; 10', 20'), chacun à au moins deux sorties (11-12, 21-22; 11'-12', 21'-22') et relié par une entrée à la sortie PWM normale (2) du microprocesseur (1, 1'),
chaque ensemble (10, 20; 10', 20')étant agencé pour que l'une de ses deux sorties (11-12, 21-22; 11'-12', 21'-22') corresponde à la sortie PWM (2) du microprocesseur (1),
- iii) des moyens (B) d'inversion des deux sorties (11-12, 21-22; 11'-12', 21'-22') de chaque ensemble (10, 20; 10', 20').

2. Générateur selon la revendication 1, dans lequel chaque ensemble (10, 20) est agencé pour que l'autre (12, 11; 22, 21) de ses deux sorties reste à un niveau extrême de la sortie PWM et chaque ensemble (10, 20) est relié, par une autre entrée (B), à une sortie (3, 4) du microprocesseur (1) d'inversion de ses deux sorties (11, 12; 21, 22).

3. Générateur selon la revendication 2, dans lequel le niveau extrême est le niveau supérieur.

4. Générateur selon la revendication 1, dans lequel le microprocesseur (1') comporte au moins deux sorties PWM normales (5, 6) reliées respectivement aux entrées des deux ensembles (10', 20'), chaque ensemble (10', 20') étant agencé pour que ses deux sorties (11'-12', 2l'-22') soient inversées.
